Europäisches Patentamt

European Patent Office

Office européen des brevets

(11) Veröffentlichungsnummer: **0 485 643 A1**

## (12) EUROPÄISCHE PATENTANMELDUNG

(21) Anmeldenummer: **90121576.4**

(22) Anmeldetag: **12.11.90**

(51) Int. Cl.⁵: **B60S 1/32**

(43) Veröffentlichungstag der Anmeldung:
**20.05.92 Patentblatt 92/21**

(84) Benannte Vertragsstaaten:
**DE FR GB IT SE**

(71) Anmelder: **Rehwald, Willi, Dr. Ing.**
**Jasminstrasse 16**
**W-7030 Böblingen(DE)**

(72) Erfinder: **Rehwald, Willi, Dr. Ing.**
**Jasminstrasse 16**
**W-7030 Böblingen(DE)**

(54) **Scheibenwischer.**

㊼ Die bekannten Scheibenwischerarme sind so aufgebaut, daß die im Schwerpunkt des von der Scheibe abklappbaren Teils angreifenden Massenkräfte den Anpreßdruck des Wischerblattes mit zunehmender Winkelgeschwindigkeit verringern, was zu schlechteren Wischergebnissen führt.

Ein Scheibenwischer ohne diesen Nachteil besitzt einen Gesamtschwerpunkt (S), der senkrecht zur Scheibe (SCH) beweglichen Teile (WA), der von der Scheibe aus betrachtet stets oberhalb einer Ebene (E) verbleibt, die durch die Klappachse (KA) geht und auf der die Wischerdrehachse (WDA) senkrecht steht.

Zur Verbesserung der Wischergebnisse werden Wischerbügel vorgesehen, deren Schwerpunkte auf ihren Drehachsen liegen. Außerdem werden die Massenkräfte der Wischgummis direkt auf den Wischerarm (WA) übertragen.

Figur 3

EP 0 485 643 A1

Die Erfindung betrifft einen Scheibenwischer, welcher für die Reinigung der Scheiben von Fahrzeugen aller Art erforderlich ist und der aus einem Antriebsmotor, einem Wischergetriebe, einem Halte- und Anpreßgestänge (Wischerarm), Wischerhaupt- und/oder Nebenbügeln sowie einem oder mehren Wischgummis besteht.

Alle bisher bekannt gewordenen Scheibenwischer haben vor allem den Nachteil, daß bei größeren Mengen des auf sie auftreffenden Mediums, wie Regen, verschmutztes Spritzwasser, Schnee, Schneeregen und unterkühlter Regen, sowie bei den nun erforderlichen höheren Wischgeschwindigkeiten die Wischblätter von den Scheiben abheben, weil sich die erzeugten Gegenkräfte stärker auswirken, als die Anpreßkräfte.

Das Problem des Abhebens der Wischblätter, vorwiegend von der gekrümmten Frontscheibe schnell fahrender Kraftfahrzeuge und/oder bei schnellen Wischgeschwindigkeiten, ist seit langem bekannt. Es hat deshalb nicht an Anstrengungen und Bemühungen der einschlägigen Industrie gefehlt, dieses Problem zu lösen, wie die vielen unterschiedlichen, auf dem Markt befindlichen, Scheibenwischerkonstruktionen beweisen.

In der DE PS 39 10 404 ist beispielsweise eine Scheibenwischeranordnung mit mindestens zwei Scheibenwischern beschrieben, die eine, je Scheibenwischer vorgesehene Anpreßvorrichtung zur Erzeugung eines Anpreßdruckes der Wischblätter auf die Scheibe aufweist.

Bei dieser Konstruktion wurden besondere Vorkehrungen getroffen, damit sich bei Stillstand des Fahrzeuges der Anpreßdruck wenigstens eines Wischers von denen anderer Wischer unterscheidet. Das Problem des Abhebens der Wischblätter wird hier durch einen erhöhten Anpreßdruck angegangen, der das Abheben des Wischblattes zwar erschwert, dafür aber die feingeschliffenen Lippen des Wischgummis bei stillstehendem Wischer ständig quetscht und sogar plastisch verformt. Die damit verbundenen Nachteile sind vor allem schlechte Wischergebnisse und ein erhöhter Verschleiß des Wischgummis.

Ferner geht es bei der Ausführung eines Scheibenwischers nach DE PS 38 00 946 darum, durch Verbesserung eines Schwenkteiles, das an einem Antriebsglied in der Wischebene schwenkbar an einem Horizontalgelenk gelagert ist, die Wischeigenschaften eines Scheibenwischers zu verbessern.

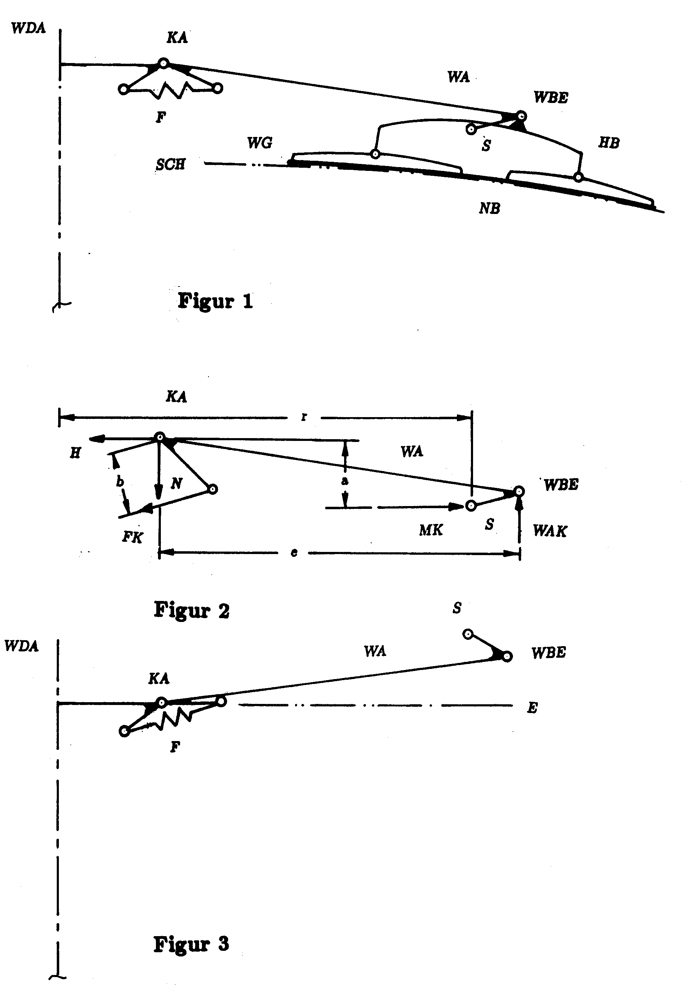

An Hand von Figur 1 ist deutlich erkennbar, daß alle Scheibenwischer bisher so konstruiert sind, daß im Schwerpunkt S der von der Scheibe SCH abklappbaren und während des Wischvorgangs senkrecht zur Scheibe beweglichen Teile angreifenden Massenkräfte den Anpreßdruck des Wischblattes mit zunehmender Winkelgeschwindigkeit der Wischerwelle verringern. Die nach Figur 2 am abklappbaren Teil des Scheibenwischers angreifenden äußeren Kräfte lassen dies erkennen.

Besonders in solchen Bereichen, in denen der Schwerpunkt zur gewölbten Scheibe hin beschleunigt werden muß, treten dadurch Wischfehler auf, die an einem im Wischfeld verbliebenen Wasser- oder Schmutzfilm beziehungsweise an Schnee- und Eisresten zu erkennen sind.

Weil dieses Problem mit bekannten Mitteln bisher jedoch nicht zufriedenstellend gelöst werden konnte, ist es daher die Aufgabe der vorliegenden Erfindung hier Abhilfe zu schaffen, indem sie Scheibenwischerkonstruktionen angibt, bei denen die Wischblätter weder bei starken Niederschlägen und/oder hohen Wischgeschwindigkeiten, noch bei hohen Fahrgeschwindigkeiten von der Scheibe abheben.

Ein solcher Scheibenwischer weist die im Hauptanspruch der Erfindung angegebenen Merkmale auf. Die Unteransprüche betreffen weitere vorteilhafte konstruktive Weiterbildungen und Ausgestaltungen dieses Scheibenwischers, beziehungsweise Verbesserungen von Scheibenwischern herkömmlicher Bauweise.

Durch die in den Patentansprüchen angegebenen Lösungsmittel wird der prinzipielle Mangel aller bekannten Scheibenwischerkonstruktionen behoben, der sich aus einer die Anpressung der Wischblätter betreffenden ungünstigen Schwerpunktlage ergibt, indem diese den Schwerpunkt an eine günstige Position verlegen oder den nachteiligen Einfluß der Massenkräfte beseitigen.

Durch die Erfindung wird also erreicht und gewährleistet, daß die Wischblätter von Scheibenwischern auch bei größeren Anströmgeschwindigkeiten und erst recht bei höheren Wischgeschwindigkeiten, stets so stark an die Scheibe gepreßt werden, daß einwandfreie Wischergebnisse erzielt werden.

Nachfolgend wird die Erfindung anhand von durch Zeichnungen erläuterten Ausführungsbeispielen näher beschrieben. Es zeigen:

Figur 1,
eine Prinzipdarstellung des Aufbaus bekannter Autoscheibenwischer, insbesondere der Lage des Gesamtschwerpunkts aller senkrecht zur Scheibe beweglichen Teile,

Figur 2,
eine schematische Darstellung aller am Wischarm bekannter Scheibenwischer angreifenden äußeren Kräfte und Massenkräfte,

Figur 3,
eine schematische Darstellung eines Scheibenwischers gemäß der Erfindung, bei dem die Massenkraft die Anpreßkraft des Wischblattes erhöht,

Figuren 4 und 5,

Prinzipdarstellungen des konstruktiven Aufbaus des während des Wischvorgangs senkrecht zur Scheibe beweglichen Teils eines Scheibenwischers nach der Erfindung,

Figuren 6 bis 8

Prinzipdarstellungen von konstruktiven Varianten, mit denen ein winkelgeschwindigkeitsabhängiger Anpreßdruck der Wischblätter erreicht wird und

Figur 9

eine Prinzipdarstellung der an einem Wischerbügel angreifenden Kräfte.

Die Figuren 1 und 2 dienen im folgenden der Erläuterung der Probleme und Nachteile, die den bekannten Scheibenwischerkonstruktionen gemeinsam sind und die durch die vorliegende Erfindung gelöst und beseitigt werden sollen.

In Figur 1 ist eine (von einem nicht dargestellten Motor) angetriebene Wischerdrehachse WDA gezeigt, an der ein Wischerarm WA um eine Klappachse KA senkrecht zur Scheibe Sch drehbar befestigt ist. Eine einerseits am Wischerarm und andererseits an der Wischerdrehachse befestigte Andruckfeder F drückt das Wischblatt des aufliegenden Wischerarms gegen die Scheibe und hält den abgeklappten Wischerarm in dieser Stellung fest. Ein meist aus einem Hauptbügel HB und mehreren Nebenbügeln bestehendes Wischblatt WBL ist im Wischblatteinhängepunkt WBE am Wischerarm WA drehbar befestigt. Der Gesamtschwerpunkt der Teile WA und WBL bei aufliegendem Wischerarm WA sei S.

Am Arm eines solchen Scheibenwischers, der im wesentlichen den Stand der Technik repräsentiert, greifen nun im Betrieb Kräfte an, die in Figur 2 näher dargestellt sind. Ein Wischerarm stellt im Sinne der Technischen Mechanik einen statisch bestimmt gestützten Balken dar, der über eine Klappachse KA von der Wischerachse WA zweiwertig und von der Scheibe SCH einwertig gestützt wird.

Für ihn gelten die statischen Gleichgewichtsbedingungen, nämlich:

1. Die Summe aller äußeren Kräfte und Massenkräfte in Richtung der Wischerdrehachse ist gleich Null,

2. die Summe aller Kräfte und Massenkräfte senkrecht zur Wischerdrehachse ist gleich Null und

3. die Summe der statischen Momente aller äußeren Kräfte und Massenkräfte um die Klappachse ist gleich Null.

Die als eingeprägte Kraft zu betrachtende Massenkraft MK ist proportional der Masse MW aller senkrecht zur Scheibe SCH beweglichen Teile, proportional dem lotrechten Abstand r des Gesamtschwerpunktes S von der Wischerdrehachse WDA und proportional dem Quadrat der Wischerwellengeschwindigkeit.

Die Klappachse KA überträgt auf den Wischerarm WA eine Gelenkkraft, deren eine Komponente N zur Wischerdrehachse WDA parallel ist und deren andere Komponente H auf der Wischerdrehachse senkrecht steht. Die Anpreßfeder F prägt dem Wischerarm WA eine Kraft FK ein, von deren Wirkungslinie die Klappachse den lotrechten Abstand b hat.

Dem statischen Moment $M1 = b \times FK$ der eingeprägten Kraft FK um die Klappachse hält beim ruhenden Scheibenwischer das statische Moment $M3 = WAK \times e$ der im Wischblatteinhängepunkt WBE angreifenden Wischeranpreßkraft WAK um KA allein das Gleichgewicht.

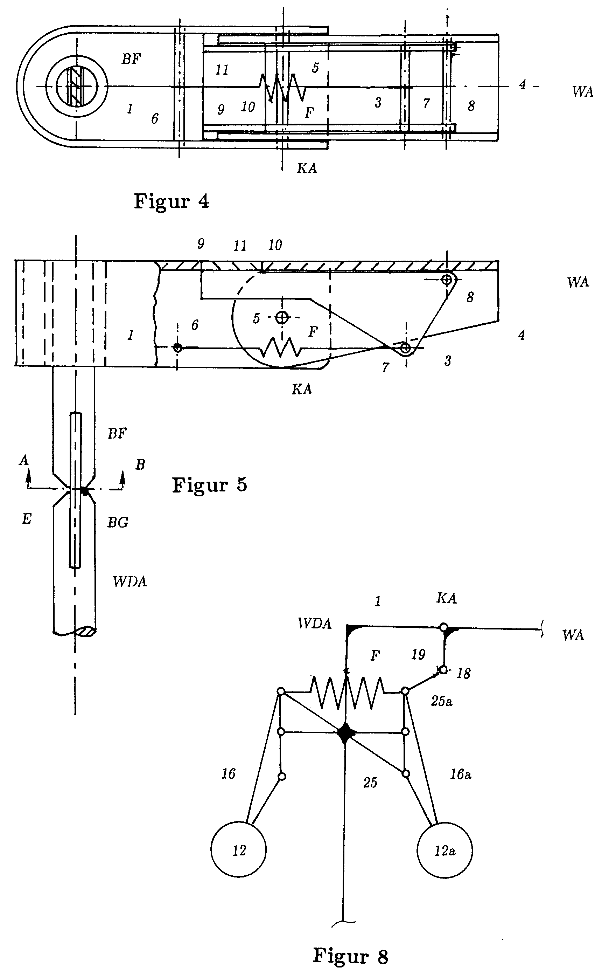

senkrecht zur Scheibe beweglichen Teile oberhalb der Ebene E zu liegen kommt, die durch die Klappachse hindurch geht, und auf der die Wischerdrehachse senkrecht steht, ist die Wischerwelle aus zwei Teilen zusammengesetzt, die durch ein Blattfeder- oder ähnlich wirkendes Gelenk BG miteinander verbunden sind. Dieses Gelenk BG ist, wie Figur 5 deutlich erkennen läßt, die Klappachse KA des sich bewegenden Wischers, die in der Ebene E liegt.

Damit die bisherige, von den üblichen Scheibenwischern bekannte, Klappachse im Betrieb des nach der Erfindung konzipierten Scheibenwischers unwirksam ist, der Wischerarm aber für das Auswechseln von Wischblättern, Haupt- und /oder Nebenbügeln oder nur des Wischgummis oder zum Reinigen der Scheibe in gewohnter Weise hochgeklappt werden kann, wird in das Befestigungsstück 4 des Wischerarmes WA drehbar um die Achse 8 ein Sperrstück 3 eingebaut. Die an der Verbindungsstelle zur Befestigung des Wischerarms U-förmig geformten Befestigungsstücke 1 und 4 besitzen Stirnflächen 9 und 10, die beim Hochklappen, d.h. Drehen des Wischerarms um die Achse 5 bei ausgerücktem Sperrstück 3 nicht kollidieren können.

Bei aufliegenden Wischblättern rückt das statische Moment der Zugkraft FE (der Feder F) um die Achse 8 das Distanzstück 11 des Sperrstücks 3, bei gespannter Blattfeder BF, in den Raum zwischen den Stirnflächen 9 und 10 ein. Das Distanzstück 11 des Sperrstücks 3 ist damit eingeklemmt.

Somit kann der Summe der statischen Momente der Massenkräfte aller senkrecht zur Scheibe beweglichen Teile um die Klappachse KA im Blattfedergelenk BG und des Bei drehender Wischerwelle wirkt dem statischen Moment der eingeprägten Kraft FE noch das statische Moment $M2 = MK \times a$ der Massenkraft am Hebelarm a um die Klappachse KA entgegen und verringert die Wischeranpreßkraft WAK. WAK nimmt mit zunehmender Winkelgeschwindigkeit der Wischerwelle ab, weil die Massenkraft MK mit ihr wächst. Bei höheren Wischgeschwindigkeiten, wenn beispielsweise größere Wassermengen oder dgl. von der Scheibe zu entfernen sind, nimmt die Wischeranpreßkraft ab, statt größer zu werden, was eigentlich in dieser Situation erforderlich wäre.

Diesen in Figur 2 schematisch dargestellten Zusammenhängen ist zu entnehmen, daß die Wischblätter WBL, bestehend aus den Teilen Hauptbügel HB, Nebenbügel NB und Wischgummi WG, immer dann von der Scheibe SCH abheben, wenn die Summe der statischen Momente M1 + M2 um KA Null wird oder gar im Gegenuhrzeigersinn wirkt.

Die Lösung des Problems durch die vorliegende Erfindung ist in Figur 3 sinnbildlich dargestellt.Der Gesamtschwerpunkt S aller senkrecht zur Scheibe SCH beweglichen Teile eines Wischerarms WA befindet sich bei aufliegendem Wischer oberhalb einer Ebene E, die durch die Klappachse KA hindurchgeht und auf der die Wischerdrehachse WDA senkrecht steht. Durch diese neue Gestaltung wirkt das statische Moment der Massenkraft MK um die Klappachse KA im selben Sinne, wie das statische Moment der Federkraft FK. Nur eine erhöhte Anpreßkraft WAK kann das Momentengleichgewicht herstellen.

Einzelheiten eines Scheibenwischers, wie er nach der vorliegenden Erfindung gebaut werden kann zeigen die Figuren 4 und 5. Damit der Gesamtschwerpunkt S aller Moments der Blattfeder BF nur noch das statische Moment einer entsprechend großen Wischblattanpreßkraft WAK um die Klappachse KA im Blattfedergelenk BG das Gleichgewicht halten. Die Kraft der Zugfeder F sorgt nun nur noch dafür, daß

1. das Sperrstück 3 zwischen den Stirnflächen 9 und 10 der Verbindungsstücke 1 und 4 eingeklemmt bleibt und diese daran hindert, sich gegeneinander zu drehen

und

2. der hochgeklappte Wischerarm in dieser Stellung verbleibt.

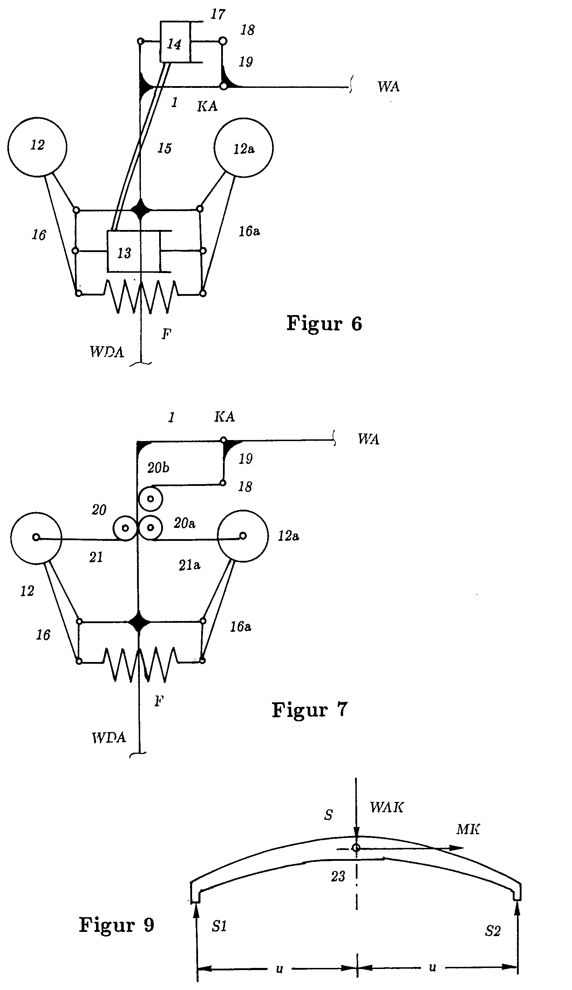

Da es, wie oben dargelegt, besser ist, den Anpreßdruck dynamisch, statt wie bisher statisch durch Federanordnungen, zu erhöhen, können mit den in den Figuren 6 bis 8 vorgeschlagenen Lösungen auch bei herkömmlichen Scheibenwischern bessere Wischergebnisse erzielt werden.

Gemeinsames Merkmal dieser verbesserten Scheibenwischervarianten sind Fliehgewichte 12, 12a, die an der Wischerdrehachse WDA so befestigt sind, daß sie bei drehender WDA auseinanderfliegen wollen. Wird dies nun mit geeigneten Kraftübertragungsmitteln wie Stangen, Hebeln, Ketten, Seilen, Fäden oder hydraulischen Druckmitteln verhindert, die einerseits an den Fliehgewichten und andererseits am Wischerarm WA befestigt sind, dann muß eine entsprechend größere Wischblattanpreßkraft WAK das Kräftegleichgewicht am Wischerarm herstellen.

Geeignete Fliehkräfte können auch durch getrennt angeordnete Fliehkraftregler erzeugt und mit den genannten Mitteln auf den Wischerarm übertragen werden.

Derartige zusätzliche Fliehkraftregler können durch Riemen-, Ketten- oder Rädergetriebe von der Wischerwelle angetrieben werden und sich schneller drehen als diese. Sie können auch mit Hilfe schaltbarer Kupplungen erst bei Bedarf in bestimmten Situationen automatisch oder manuell zugeschaltet werden. Durch entsprechende Dimensionierung der Fliehgewichte 12, 12a ist es immer möglich, die Wischblätter winkelgeschwindigkeitsabhängig an die Scheibe zu pressen.

Bei der in Figur 6 dargestellten Lösung werden die Fliehkräfte über ein Druckmittel auf die Wischblätter WB übertragen. Dabei wird über ein Gestänge 16, 16a der Druck eines in den Zylindern 13, 14 und einer Verbindungsleitung 15 eingeschlossenen Druckmittels erhöht. Weil sich die Schubstange 17 über ein Gelenk 18 an einem Hebel 19 des Wischerarms abstützt, muß eine veränderte Anpreßkraft WAK das Kräftegleichgewicht herstellen.

In Figur 7 ist eine Ausführungsbeispiel dargestellt, bei dem über Umlenkrollen 20, 20a, 20b gelegte Seile 21, 21a die Fliehgewichte 12, 12a mit dem Wischerarm verbinden und die Fliehkraft auf die Wischblätter übertragen. An Stelle der Seile können auch Ketten verwendet werden, die über Kettenräder anstatt der Seilrollen geführt sind. Auch hier erfolgt die Kraftübertragung über ein Gelenk 18 und eine Stange 19, die fest mit dem Wischerarm WA verbunden ist.

Figur 8 zeigt eine weitere Lösung, wie die Fliehkräfte auf die Wischblätter mit Hilfe gekreuzter Gestänge 16, 16a, 25, 25a übertragen werden, die mit dem Wischerarm verbunden sind. Eine freie Stange 25a ist über ein Gelenk 18 mit einer fest am Wischerarm WA befestigten Stange 19 verbunden, sodaß auch hier eine entsprechende Anpreßkraft des Wischblattes das Kräftegleichgewicht mit den Fliehkräften und der Federkraft herstellt. Wie im Beispiel nach den Figuren 6 und 7, stützen sich auch hier die Feder F und die Fliehgewichte letztendlich über die Wischblätter auf der Scheibe ab.

Die bisher vorhandene Zugfeder herkömmlicher Scheibenwischer, welche einerseits an der Wischerdrehachse WDA und andererseits am Wischerarm WA befestigt ist, kann korrosionsgeschützt in derartige Fliehkraftregler verlagert werden. Sie sorgt für einen geringen Anpreßdruck bei stillstehendem Scheibenwischer und arretiert den abgeklappten Wischerarm.

Figur 9 zeigt schließlich einen Wischbügel mit den an ihm angreifenden äußeren Kräften und Massenkräften. Weil er durch eine Achse 23 mit dem Wischerarm oder mit anderen Bügeln verbunden ist, stellt er einen zweiarmigen Hebel dar. An beiden Hebelenden stützt er sich entweder auf dem Wischgummi WG oder auf anderen Bügeln NB ab, wie beispielsweise in Figur 1 erkennbar ist. Die Abstützkräfte ergeben sich aus dem Gleichgewicht ihrer Momente S1 x u beziehungsweise S2 x u um seine Drehachse 23.

Befindet sich nun der Schwerpunkt S eines Bügels nicht auf, sondern ober- oder unterhalb der Drehachse, dann hat auch die Massenkraft MK ein Moment um die Drehachse und bewirkt damit, daß sich der Bügel mit einem Ende stärker auf der Scheibe abstützt, als mit dem anderen. Dadurch wird schließlich der Wischgummi an den Verbindungsstellen unterschiedlich an die Scheibe gedrückt.

Dieser Nachteil kann durch Verlagerung des Bügelschwerpunktes auf die Drehachse beseitigt werden. Durch entsprechend gewählte Längen der Bügelschenkel ist dieser Nachteil jedoch nur für eine diskrete Winkelgeschwindigkeit zu beheben.

## Patentansprüche

1. Scheibenwischer mit einem Antrieb, einer Wischerdrehachse (WDA), einem abklappbaren Wischerarm (1, 4), der mit der Wischerdrehachse verbunden und einen oder mehrere Bügel (WB) zur Aufnahme von einem oder mehreren Wischblättern (WBL) aufweist, die auf der Scheibe (SCH) aufliegen, **dadurch gekennzeichnet**, daß sich der Gesamtschwerpunkt (S) aller im Betrieb senkrecht zur Scheibe (SCH) beweglichen Teile (WA, WB, WG), von der Scheibe aus betrachtet, stets oberhalb einer Ebene (E) befindet, die durch die Klappachse (5, KA, BG) geht und auf der die Wischerdrehachse (WDA) senkrecht steht, sodaß sich die Kraft (WAK), mit der die Wischblätter an die Scheibe gepreßt werden, mit der Winkelgeschwindigeit der Wischerwelle vergrößert.

2. Scheibenwischer nach Anspruch 1, **dadurch gekennzeichnet**, daß der Gesamtschwerpunkt (S) durch entsprechende Anordnung der konstruktiven Elemente des Wischerarmes (WA), der Bügel (WB), der Wischblätter (WBL) und deren Massen sowie gegebenenfalls durch Anbringen von Zusatzmassen in die in Anspruch 1 gekennzeichnete Lage einstellbar ist.

3. Scheibenwischer nach Anspruch 1 und/oder 2, **dadurch gekennzeichnet**, daß die Wischerdrehwelle aus einem vorderen und einem hinteren Teil besteht, die durch ein Blattfedergelenk (BG) miteinander verbunden sind, daß ferner am Wischerarm (WA) ein Sperrstück (3) vorgesehen ist, das zwischen den Stirnflächen (9, 10) von Verbindungsstücken (1, 4) zur Verbindung des Wischerarmes mit der Wischerwelle eingeklemmt ist, sodaß der Wischerarm (WA) gegenüber dem vorderen Teil der Wischerwelle nicht mehr von der Scheibe (SCH) wegbewegbar ist und daß der Wischerarm durch Herausdrücken des Sperrstücks (3) aus seiner eingeklemmten Stellung gegenüber dem vorderen Teil der Wischerdrehachse von der Scheibe abklappbar ist.

4. Scheibenwischer nach einem oder mehreren der Ansprüche 1 bis 3, **dadurch gekennzeichnet**, daß zur Erhöhung der Anpreßkraft an der Wischerwelle Fliehgewichte (12, 12a) angebracht sind, deren Fliehkräfte bei drehender Wischerwelle über ein Gestänge (16, 16a, 17, 18, 19) sowie ein in zwei Zylindern (13, 14), Balgen, Blasen oder dgl. und einer Verbindungsleitung (15) eingeschlossenes Druckmittel auf die Wischblätter übertragbar sind.

5. Scheibenwischer nach einem oder mehreren der Ansprüche 1 bis 3, **dadurch gekennzeichnet**, daß ein Zugmittel, bestehend aus Zugseilen (21, 21a), Ketten, Schnüren oder dgl., die Fiehgewichte (12, 12a) über Seilrollen, beziehungsweise Kettenräder (20, 20a, 20b) mit dem Wischerarm (WA) verbinden.

6. Scheibenwischer nach einem oder mehreren der Ansprüche1 1 bis 3, **dadurch gekennzeichnet**, daß die Fliehgewichte über ein überkreuz verlaufendes Gestänge (16, 16a, 25, 25a) mit dem Wischerarm verbunden ist.

7. Scheibenwischer nach einem oder mehreren der Ansprüche 1 bis 6, **dadurch gekennzeichnet**, daß die Fliehkraft von Fliehgewichten (12, 12a) erzeugbar ist, die an einer gesonderten Welle befestigt sind, welche über ein Getriebe mit der Wischerwelle verbunden ist und sich mit gleicher oder anderer Winkelgeschwindigkeit dreht als die Wischerwelle.

8. Scheibenwischer nach Anspruch 7, **dadurch gekennzeichnet,** daß eine automatisch oder manuell schaltbare Kupplung vorgesehen ist, durch die erst bei Bedarf das Getriebe in Gang setzbar ist.

9. Scheibenwischer nach einem oder mehreren der Ansprüche 1 bis 8, **dadurch gekennzeichnet**, daß der Schwerpunkt (S) der Wischerbügel (HB, NB) so gewählt ist, daß er auf der Drehachse (23) liegt.

10. Scheibenwischer nach einem oder mehreren der Ansprüche 1 bis 9, **dadurch gekennzeichnet**, daß die Massenkraft des Wischgummis von einem Hebel direkt auf den Wischerarm und/oder von einem Faden direkt auf die Wischerwelle , statt auf den inneren Bügel übertragbar ist.

**Figur 1**

**Figur 2**

**Figur 3**

Figur 4

Figur 5

Figur 8

**Figur 6**

**Figur 7**

**Figur 9**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-761619 (GENERAL MOTORS)<br>* das ganze Dokument *<br>--- | 1-3 | B60S1/32 |
| A | EP-A-263007 (DELLUC)<br>* Spalte 8, Zeile 62 - Spalte 10, Zeile 63; Figuren 14, 17 *<br>----- | 1, 2 | |

RECHERCHIERTE
SACHGEBIETE (Int. Cl.5 )

B60S

Der vorliegende Recherchenbericht wurde für alle Patentansprüche erstellt

| Recherchenort | Abschlußdatum der Recherche | Prüfer |
|---|---|---|
| DEN HAAG | 26 JUNI 1991 | VERLEYE J. |

EPO FORM 1503 03.82 (P0403)